# EUROPÄISCHE PATENTANMELDUNG

(11) **EP 4 792 647 A1**
(43) Veröffentlichungstag der Anmeldung: **19.08.2026**
(21) Anmeldenummer: 26150561.4
(22) Anmeldetag: 07.01.2026
(51) Int. Cl.: A01M 7/00

(54) **SPRITZEINRICHTUNG FÜR EINE LANDWIRTSCHAFTLICHE ARBEITSMASCHINE UND VERFAHREN ZUM BETREIBEN EINER SPRITZEINRICHTUNG FÜR EINE LANDWIRTSCHAFTLICHE ARBEITSMASCHINE**

(30) Priorität: 13.02.2025 DE 102025000534
(71) Anmelder: Amazonen-Werke H. Dreyer SE & Co. KG, 49205 Hasbergen (DE)
(72) Erfinder: Heidemann, Linus, 49205 Hasbergen (DE); Dembeck, Achim, 49205 Hasbergen (DE)
(74) Vertreter: Heisel, Per-Christian

(57) **Zusammenfassung**

Spritzeinrichtung (10), umfassend einen Vorratsbehälter (11) zum Vorhalten eines Spritzmittels, einen Hauptförderpfad (12), entlang welchem wenigstens eine Fördereinrichtung (13) zum Fördern des Spritzmittels angeordnet ist, einen vom Hauptförderpfad (12) abzweigenden Spritzpfad (14), entlang welchem das Spritzmittel mit einem einstellbaren Spritzdruck förderbar ist, einen vom Hauptförderpfad (12) abzweigenden Rührpfad (16), entlang welchem zumindest ein Teil des Spritzmittels mit einem einstellbaren Rührdruck förderbar ist, wenigstens einen weiteren Förderpfad (17), wobei zum Anpassen des Spritzdrucks und/oder des Rührdrucks zwischen dem Hauptförderpfad (12) und dem Spritzpfad (14) und dem Rührpfad (16) jeweils eine Ventileinrichtung (20, 21) angeordnet ist. Damit die in den unterschiedlichen Pfaden verschiedenen Durchflüsse bzw. Drücke des Spritzmittels in einfacher Weise besonders flexibel und/oder unabhängig voneinander einstellbar sind, ist eine Steuerungseinrichtung (100) vorgesehen, welche dazu eingerichtet ist, einerseits die Ventileinrichtungen (20, 21) derart anzusteuern und andererseits zumindest einen Teil des Spritzmittels derart über den wenigstens einen weiteren Förderpfad (17) umzuleiten, dass während des Betriebs im Hauptförderpfad (12) ein in an- und/oder aufstauender Weise resultierender Versorgungsdruck des Spritzmittels einstellbar ist, welcher sich vom Spritzdruck und/oder Rührdruck unterscheidet.

## Beschreibung

Die Erfindung betrifft eine Spritzeinrichtung für eine landwirtschaftliche Arbeitsmaschine gemäß dem Oberbegriff des Patentanspruches 1 und ein Verfahren zum Betreiben einer Spritzeinrichtung für eine landwirtschaftliche Arbeitsmaschine gemäß dem Oberbegriff des Patentanspruches 8.

Im Bereich der Landwirtschaft werden in der Regel getragene, gezogene und/oder selbstfahrende landwirtschaftliche Arbeitsmaschinen eingesetzt. Derartige Arbeitsmaschinen sind häufig zum Ausbringen eines Spritzmittels auf einer landwirtschaftlichen Nutzfläche vorgesehen und umfassen in der Regel eine Spritzeinrichtung. Je nach Anwendung kann eine derartige Arbeitsmaschine mit einer Spritzeinrichtung nach Art einer Feldspritze, einer Sä- und/oder Düngermaschine oder eines Hackgeräts ausgeführt sein.

Eine gattungsgemäße Spritzeinrichtung ist beispielsweise aus den Druckschriften DE 3824744 A1, DE 10 2020 117 751 A1 oder EP 3 085 229 B1 bereits bekannt. Demnach umfasst die Spritzeinrichtung zumindest einen Vorratsbehälter zum Vorhalten wenigstens eines Bestandteils des Spritzmittels und einen Hauptförderpfad, welcher in fluidleitender Weise mit dem Vorratsbehälter verbunden ist. Entlang des Hauptförderpfads ist wenigstens eine Fördereinrichtung zum Fördern des Spritzmittels angeordnet. Des Weiteren ist ein vom Hauptförderpfad abzweigender Spritzpfad vorgesehen, entlang welchem eine Vielzahl von über der Nutzfläche verbringbaren und zum Ausbringen des Spritzmittels vorgesehenen Ausbringelementen, insbesondere Spritzdüsen, angeordnet sind. Zumindest ein Teil des Spritzmittels ist dabei mit einem einstellbaren Spritzdruck entlang des Spritzpfads förderbar. Ferner ist ein vom Hauptförderpfad abzweigender Rührpfad vorgesehen, entlang welchem zumindest ein Teil des Spritzmittels mit einem einstellbaren Rührdruck zum Umrühren und/oder Umwälzen des in dem Vorratsbehälter vorhaltbaren Spritzmittels förderbar ist. Des Weiteren umfasst die Spritzeinrichtung wenigstens einen weiteren von dem Hauptförderpfad abzweigenden Förderpfad, entlang welchem zumindest ein Teil des Spritzmittels mit einem einstellbarem weiteren Förderdruck förderbar ist. Darüber hinaus ist zum Anpassen des Spritzdrucks und/oder des Rührdrucks zwischen dem Hauptförderpfad und dem Spritzpfad und zwischen dem Hauptförderpfad und dem Rührpfad jeweils wenigstens eine Ventileinrichtung angeordnet. Insbesondere ist hierbei vorgesehen, dass das Spritzmittel von der wenigstens einen Fördereinrichtung durch den Hauptförderpfad und den davon abzweigenden Spritzpfad, Rührpfad und/oder der weiteren oder zusätzlichen Förderpfade gefördert wird.

Derartige Spritzeinrichtungen weisen bislang den Nachteil auf, dass die Durchflüsse, insbesondere die Drücke, des Spritzmittels, in den verschiedenen Pfaden der Spritzeinrichtung, wie dem Hauptförderpfad, dem Spritzpfad, dem Rührpfad und/oder mindestens einem weiteren oder zusätzlichen Förderpfad, in verhältnismäßig erheblichem Maße voneinander abhängig sind. Mit anderen Worten ist eine Einstellung voneinander abweichender Durchflüsse, insbesondere Drücke, zwischen den unterschiedlichen Pfaden nicht ohne Weiteres oder wenn überhaupt nur mit verhältnismäßig sehr hohen Verlustleistungen möglich. In vereinfachten Worten an einem einfachen beispielsweise dargestellt, wird das Spritzmittel mit einem verhältnismäßig geringen Durchfluss oder niedrigem Druck über en Spritzpfad ausgebracht, so kann das Spritzmittel dabei in der Regel auch nur mit einem geringen Durchfluss oder niedrigem Druck über den Rührpfad und/oder anderen oder zusätzlichen Förderpfaden innerhalb der Spritzeinrichtung gefördert werden. Somit können insbesondere zusätzliche fluidische Funktionen innerhalb er Spritzeinrichtung, welche einen verhältnismäßig hohen oder höheren Durchfluss oder Druck erfordern, nicht ohne Weiteres oder zumindest nur eingeschränkt genutzt werden.

Die der Erfindung zugrunde liegende Aufgabe besteht somit zunächst darin, die vorstehend beschriebenen Nachteile des bisherigen Stands der Technik zumindest teilweise zu beseitigen. Insbesondere besteht die zugrunde liegende Aufgabe darin, eine Spritzeinrichtung so zu gestalten, dass die in den unterschiedlichen Pfaden verschiedenen Durchflüsse, insbesondere Drücke, des Spritzmittels in einfacher Weise besonders flexibel und/oder unabhängig voneinander einstellbar sind.

Diese Aufgabe wird erfindungsgemäß durch eine, insbesondere elektronische, Steuerungseinrichtung gelöst, welche dazu eingerichtet ist, einerseits die Ventileinrichtungen derart anzusteuern und andererseits zumindest einen Teil des Spritzmittels derart über den wenigstens einen weiteren Förderpfad umzuleiten, dass während des Betriebs im Hauptförderpfad ein in an- und/oder aufstauender Weise resultierender Versorgungsdruck des Spritzmittels einstellbar ist, welcher sich vom Spritzdruck und/oder Rührdruck unterscheidet.

In Folge dieser Maßnahme ist der von der wenigstens einen Fördereinrichtung durch den Spritzpfad förderbare Spritzdruck des Spritzmittels und der durch den Rührpfad förderbare Rührdruck des Spritzmittels zumindest weitestgehend unabhängig voneinander und insbesondere unabhängig vom Versorgungsdruck des Spritzmittels im Hauptförderpfad und/oder weiteren oder zusätzlichen Förderpfaden einstellbar. Insbesondere ist hierbei vorgesehen, dass die jeweiligen Ventileinrichtungen des Spritzpfads und des Rührpfads in einer entsprechenden Ventilstellung verbracht werden oder verbringbar sind, welche es ermöglicht, dass sich das über die Fördereinrichtung förderbare oder geförderte Spritzmittel bzw. der Volumenstrom stromaufwärts an den Ventileinrichtungen und/oder im Hauptförderpfad anstaut und/oder aufstaubar ist und daraus ein gegenüber dem Spritzdruck und Rührdruck erhöhter Versorgungsdruck resultiert. Ferner bevorzugt ist dabei vorgesehen, dass das im Hauptförderpfad mit dem Versorgungsdruck und/oder Förderdruck angestaute Spritzmittel zumindest teilweise über den weiteren Förderpfad umleitbar ist und/oder umgeleitet wird. Unter dem Versorgungsdruck ist alternativ oder zusätzlich ein zu einem definierten Zeitpunkt während des Betriebs resultierender Maximal- und/oder Höchstdruck innerhalb der Spritzeinrichtung zu verstehen. Insbesondere ermöglicht die erfindungsgemäße Maßnahme, dass das von der Fördereinrichtung förderbare Spritzmittel entlang des Spritzpfades und/oder des Rührpfades mit einem gegenüber dem Hauptförderpfad und Versorgungsdruck niedrigeren Druck förderbar ist.

Darüber hinaus hat die erfindungsgemäße Maßnahme insbesondere den Vorteil, dass bei einem verhältnismäßig und/oder zumindest nahezu gleichbleibendem bzw. unverändertem Durchfluss ein höherer Druck, vorzugsweise Spritzdruck, Rührdruck oder Förderdruck, erreicht oder erreichbar ist. Beispielsweise kann durch das Aufstauen des Spritzmittels bei geringerem oder gleichem Rührvolumenstrom eine höhere Rührleistungen erzielt werden.

Das Spritzmittel ist hierbei bevorzugt als landwirtschaftliche Spritzflüssigkeit ausgeführt. Das Spritzmittel kann dabei aus wenigstens einer Trägerflüssigkeit oder Grundbrühe und/oder wenigstens einem Wirkstoff ausgeführt sein. Die wenigstens eine Trägerflüssigkeit oder Grundbrühe und der wenigstens eine Wirkstoff können dabei bereits vor der Ausbringung und/oder während der Ausbringung zum auszubringenden Spritzmittel bzw. zur auszubringenden Spritzflüssigkeit vermischt oder angerührt werden. Alternativ oder zusätzlich kann der wenigstens eine Wirkstoff maschinenintern über eine Einspülschleuse und/oder nach Art einer Direkt-einspeisung zu der Trägerflüssigkeit zugegeben werden. Das auszubringende Spritzmittel bzw. die Spritzflüssigkeit kann dabei je nach Anwendung nach Art eines Pflanzenschutzmittels, Düngemittels, Unkraut- und/oder Schädlingsbekämpfungsmittels oder dergleichen ausgeführt sein.

Insbesondere können der Spritzeinrichtung ein oder mehreren Vorratsbehälter zugeordnet sein. Das wenigstens eine Spritzmittel kann dabei in dem einen oder den mehreren Vorratsbehältern bevorratbar sein. Ferner können unterschiedliche Spritzmittel in unterschiedlichen Vorratsbehältern bevorratbar sein. Ferner kann wenigstens einer der mehreren Vorratsbehälter für eine Trägerflüssigkeit oder Grundbrühe und wenigstens ein anderer Vorratsbehälter für wenigstens einen Wirkstoff vorgesehen sein.

Die Ventileinrichtungen sind bevorzugt nach Art von Druckregelventilen ausgebildet. Ferner bevorzugt können die Ventileinrichtungen als Proportionalventile oder Wegeventile ausgebildet sein. Die Ventileinrichtungen können alternativ oder zusätzlich auch als Magnetventile, insbesondere pulsweitenmodulierende oder pulsweitenfrequenzmodulierende Ventile bzw. als sogenannte PWM- oder PWFM-Ventile ausgebildet sein. Ferner können die mehreren Ventileinrichtungen auch unterschiedlich ausgebildet sein.

Darüber hinaus ist die wenigstens eine Fördereinrichtung vorzugsweise als Pumpe ausgebildet. Vorzugsweise kann die Fördereinrichtung als Verdrängerpumpe oder Strömungspumpe ausgebildet sein. Ferner bevorzugt ist eine als Kreiselpumpe oder Kolbenmembranpumpe ausgebildete Fördereinrichtung. Besonders bevorzugt ist hierbei jedoch eine als Verdrängerpumpe ausgebildete Fördereinrichtung, welche mittels des Aufstauens des Spritzmittels durch die Ventileinrichtungen einen noch höheren Druck bzw. Versorgungsdruck oder Leistung erreicht oder erreichbar ist, als es insbesondere mit einer Strömungspumpe oder Kreiselpumpe möglich wäre. Alternativ oder zusätzlich kann die Fördereinrichtung aber auch nach einer anderen Art von Pumpen, beispielsweise als Drehkolbenpumpe oder dergleichen, ausgebildet sein. Ferner können alternativ oder zusätzlich mehrere Fördereinrichtungen vorgesehen sein, wobei die Fördereinrichtungen dabei besonders bevorzugt unterschiedlichen Förderpfaden oder Pumpenkreisläufen zugeordnet sind.

Unter dem Begriff "Pfad" ist im erfindungsgemäßen Zusammenhang insbesondere eine Leitung zu verstehen, welche zum, insbesondere druckbeaufschlagten, Fördern oder Leiten von Spritzmittel bzw. Spritzflüssigkeit vorgesehen ist. Der jeweilige Pfad kann dabei je nach Ausführung nach Art einer abzweigenden Stichleitung oder als Kreis- oder Ringleitung ausgeführt sein. Der Begriff "abzweigend" bedeutet in diesem Zusammenhang, insbesondere dass ein jeweiliger Pfad, beispielsweise Spritzpfad, Rührpfad oder Förderpfad, in spritzmittelausleitender Weise stromabwärts der Fördereinrichtung am Hauptförderpfad angeordnet und/oder mit diesem verbunden ist. Der Hauptförderpfad kann in diesem Zusammenhang alternativ oder zusätzlich auch als Versorgungspfad oder Versorgungsleitung bzw. als Hauptversorgungspfad oder Hauptversorgungsleitung bezeichnet werden.

Die Ausbringelemente sind bevorzugt als Spritzdüsen ausgeführt und in fluidleitender Weise mit dem Spritzpfad verbindbar und/oder dazu eingerichtet, das Spritzmittel in Form eines Spritzfächers auf die landwirtschaftliche Nutzfläche und/oder darauf befindlichen Pflanzen zu applizieren. Ferner bevorzugt kann zwischen dem Spritzpfad und einem jeweiligen Ausbringelement wenigstens ein Ventil zum bedarfsgerechten Freigeben und/oder Sperren des Spritzmittels angeordnet sein. Darüber hinaus können die Ausbringelemente entlang eines der Arbeitsmaschine zugeordneten und/oder höhengeführten Spritzgestänges angeordnet sein. Weiterhin können die Ausbringelemente als Einfachdüsenkörper mit einer einzigen Düse oder als Mehrfachdüsenkörper mit mehreren Düsen ausgeführt sein und/oder einer von mehreren Teilbreiten zugeordnet sein. Die Ausbringelemente, insbesondere deren Ventile, können dabei als PWM- oder PWFM-Ventile ausgebildet sein.

Unter dem Begriff "Druck" ist im erfindungsgemäßen Zusammenhang vorzugsweise ein Druck des Spritzmittels zu verstehen, insbesondere mit dem das Spritzmittel innerhalb eines jeweiligen Pfads bzw. einer jeweiligen Leitung beaufschlagt ist und/oder gefördert wird. Alternativ oder zusätzlich ist darunter auch ein Volumenstrom, insbesondere ein Volumenstrom des Spritzmittels, zu verstehen. Somit kann beispielsweise unter dem Spritzdruck, Rührdruck und/oder Versorgungsdruck alternativ oder zusätzlich ein Volumenstrom des Spritzmittels im Spritzpfad, Rührpfad und/oder Hauptförderpfad verstanden werden.

Darüber hinaus ist im erfindungsgemäßen Zusammenhang unter dem Begriff "Steuerungseinrichtung" alternativ oder zusätzlich eine Steuerungs- und/oder Regelungseinrichtung zu verstehen, welche zum Steuern und/oder Regeln vorgesehen ist. Insofern ist unter dem Begriff "Steuern" alternativ oder zusätzlich auch ein "Regeln" zu verstehen.

Des Weiteren kann die Spritzeinrichtung während des Betriebs dazu eingerichtet sein, entweder gleichzeitig einen Teil des Spritzmittels über den Spritzpfad und die Ausbringelemente auszubringen und dabei einen anderen Teil des Spritzmittels zum Rühren bzw. Umwälzen des Spritzmittels im Vorratsbehälter über den Rührpfad in den Vorratsbehälter fördern. Alternativ oder zusätzlich kann die Spritzeinrichtung während des Betriebs dazu eingerichtet sein, zumindest einen Teil des Spritzmittels entweder über den Spritzpfad und die Ausbringelemente auszubringen oder zum Rühren bzw. Umwälzen des Spritzmittels über den Rührpfad in den Vorratsbehälter zu fördern. Alternativ oder zusätzlich dazu, kann zumindest ein anderer Teil des Spritzmittels während des Betriebs über wenigstens einen weiteren oder zusätzlichen Förderpfad der Spritzeinrichtung umleitbar sein.

Insbesondere ist durch die erfindungsgemäße Maßnahme erreicht, dass der Druck, vorzugsweise der Versorgungsdruck, des Spritzmittels innerhalb der Spritzeinrichtung nicht oder nicht nur mittels der wenigstens einen Fördereinrichtung eingestellt wird bzw. einstellbar ist, sondern zumindest teilweise auch durch die Ventileinrichtungen und/oder die jeweilige Ventileinrichtung der jeweiligen Pfade in aufstauender Weise anpassbar und/oder beeinflussbar ist, insbesondere erhöhbar ist. Mit anderen Worten und vereinfacht dargestellt, kann der mittels der wenigstens einen Fördereinrichtung einstellbare und/oder erreichbare Druck bzw. Versorgungsdruck des Spritzmittels in dem Hauptförderpfad mittels der Ventileinrichtungen weiter oder noch weiter erhöht werden, insbesondere in dem das das Spritzmittel mittels der Ventileinrichtungen im Hauptförderpfad aufgestaut wird. Besonders bevorzugt ist dadurch erreicht, dass im Hauptförderpfad aufgestaute Spritzmittel mit noch höherem Durchfluss und/oder Druck über einen weiteren und/oder zusätzlichen Förderpfad, insbesondere zur Ausführung einer fluidischen Funktion, nutzbar ist.

In einer bevorzugten Ausführungsform der erfindungsgemäßen Spritzeinrichtung ist der wenigstens eine weitere Förderpfad nach Art eines Rücklaufpfads bzw. Bypasses zum Zurückleiten wenigstens eines Teils des Spritzmittels zu dem Vorratsbehälter und/oder zu der Fördereinrichtung ausgebildet. Der wenigstens eine weitere Förderpfad zweigt dabei vorzugsweise in ausmündender Weise stromabwärts der Fördereinrichtung vom Hauptförderpfad ab. Bevorzugt mündet der wenigstens eine weitere Förderpfad dabei in einleitender Weise stromaufwärts der Fördereinrichtung in den Hauptförderpfad und/oder in den Vorratsbehälter ein. Mit anderen Worten ist der weitere Förderpfad vorzugsweise nach Art eines Kreislaufs oder einer Ringleitung, insbesondere zumindest teilweise um die Fördereinrichtung herum, ausgebildet. Insbesondere ist hierbei vorgesehen, dass zumindest ein Teil des im Hauptförderpfad überschüssigen Spritzmittels über den weiteren Förderpfad umleitbar und/oder förderbar ist. Ferner können alternativ oder zusätzlich auch mehrere derartiger Förderpfade vorgesehen sein, wobei diese abzweigend und/oder einleitend entlang des Hauptförderpfads an unterschiedlichen Positionen und/oder am Spritzpfad und/oder Rührpfad positioniert sind.

In einer Weiterbildung der erfindungsgemäßen Spritzeinrichtung ist zwischen dem wenigstens einen weiteren Förderpfad und dem Hauptförderpfad wenigstens eine weitere Ventileinrichtung zum Anpassen des weiteren Förderdrucks, insbesondere Rücklaufdrucks, angeordnet. Die wenigstens eine weitere Ventileinrichtung ist dabei vorzugsweise in fluidleitend verbindbarer Weise zwischen dem Hauptförderpfad und weiteren Förderpfad und/oder entlang des weiteren Förderpfads angeordnet. Ferner bevorzugt ist die wenigstens eine weitere Ventileinrichtung dazu eingerichtet, eine Förderung des Spritzmittels durch den weiteren Förderpfad anzupassen, freizugeben und/oder zu blockieren. Darüber hinaus ist die Steuerungseinrichtung hierbei vorzugsweise dazu eingerichtet, zumindest die Ventileinrichtungen des Spritzpfads, Rührpfads und weiteren Förderpfads in einer zueinander abgestimmten Weise derart anzusteuern, dass ein sich im Hauptförderpfad an- bzw. aufstauender und/oder nicht zum Ausbringen und/oder Rühren verwendbarer Überschuss des Spritzmittels über den weiteren Förderpfad umgeleitet wird und/oder umleitbar ist. Die Ventileinrichtungen ist besonders bevorzugt dazu eingerichtet, die Ventileinrichtung derart anzusteuern, dass sich im Hauptförderpfad ein bedarfsgerechter und/oder vorgebbarer Versorgungsdruck, insbesondere Überdruck, gegenüber dem Spritzdruck und/oder Rührdruck einstellt und/oder einstellbar ist. Vereinfacht dargestellt ist vorzugsweise vorgesehen, dass die Steuerungseinrichtung dazu eingerichtet ist, die Ventileinrichtung des weiteren Förderpfads, insbesondere gemeinsam mit wenigstens einer der Ventileinrichtungen des Spritz- und/oder Rührpfads, zur Reduzierung des Versorgungsdrucks und/oder für einen verhältnismäßig niedrigen Versorgungsdruck im Hauptförderpfad weiter zu Öffnen und/oder umgekehrt zur Erhöhung des Versorgungsdrucks weiter zu schließen. Mit anderen Worten ist der Versorgungsdruck im Hauptförderpfad insbesondere mittels und/oder in Abhängigkeit der weiteren Ventileinrichtung und/oder des weiteren Förderdrucks im weiteren Förderpfad anpassbar. Die Ventileinrichtungen sind hierbei vorzugsweise von der Steuerungseinrichtung derart ansteuerbar und/oder einstellbar, dass der weitere Förderdruck im weiteren Förderpfad zumindest nahezu dem Versorgungsdruck im Hauptförderpfad entspricht, während sich der Versorgungsdruck besonders bevorzugt vom Spritzdruck im Spritzpfad und/oder Rührdruck im Rührpfad unterscheidet.

Darüber hinaus ist eine erfindungsgemäße Spritzeinrichtung bevorzugt, bei welcher zumindest ein zusätzlicher von dem Hauptförderpfad abzweigender und für eine zusätzliche fluidische Funktion eingerichteter Förderpfad vorgesehen ist. Dabei ist entlang des zusätzlichen Förderpfads zumindest ein Teil des Spritzmittels mit einem einstellbarem zusätzlichen Förderdruck förderbar. Bevorzugt ist zwischen dem zusätzlichen Förderpfad und dem Hauptförderpfad wenigstens eine zusätzliche Ventileinrichtung zum Anpassen des zusätzlichen Förderdrucks angeordnet. Vorzugsweise ist vorgesehen, dass die zusätzliche Ventileinrichtung und/oder die Ventileinrichtungen des Spritzpfads, Rührpfads und/oder weiteren Förderpfads derart von der Steuerungseinrichtung einstellbar sind oder eingestellt werden, dass während des Betriebs der zusätzliche Förderdruck im zusätzlichen Förderpfad zumindest im Wesentlichen bzw. zumindest nahezu dem Versorgungsdruck im Hauptförderpfad entspricht. Besonders bevorzugt ist die Steuerungseinrichtung dazu eingerichtet, die Ventileinrichtungen derart anzusteuern und/oder einzustellen, dass während des Betriebs der zusätzliche Förderdruck im zusätzlichen Förderpfad den Spritzdruck im Spritzpfad und/oder den Rührdruck im Rührpfad übersteigt. Eine derartige zusätzliche Funktion, welche insbesondere mittels des zusätzlichen Förderpfads realisiert ist, kann vorzugsweise eine Reinigungsfunktion und/oder das Betreiben eines Injektors innerhalb der Spritzeinrichtung sein. Eine derartige Reinigungsfunktion kann beispielsweise eine Innenreinigung des einen und/oder eines anderen Vorratsbehälters und/oder einer Einspülschleuse und/oder anderer Einrichtungen der Spritzeinrichtung mittels des Spritzmittels selbst sein. Der Injektor kann dabei vorzugsweise zum Ansaugen von Spritzmittel, insbesondere Wirkstoff, vorgesehen sein und/oder entlang des zusätzlichen Förderpfads angeordnet sein. Alternativ oder zusätzlich kann ein derartiger Injektor und/oder der zusätzliche Förderpfad zwischen dem Hauptförderpfad und einer Einspülschleuse und/oder einem Wirkstoffbehälter, insbesondere Wirkstoffgebinde oder dergleichen, angeordnet sein.

Insbesondere ist mittels der bevorzugten erfindungsgemäßen Maßnahme ermöglicht, dass zusätzliche Funktionen innerhalb er Spritzeinrichtung während des Betriebs mit einem höheren Druck betreibbar sind, während der Spritzdruck und/oder Rührdruck bzw. die Spritz- und/oder Rührfunktion mit einem vergleichsweise niedrigen und/oder niedrigerem Druck umsetzbar bzw. betreibbar ist und/oder betrieben wird.

In einer anderen bevorzugten Ausführungsform der erfindungsgemäßen Spritzeinrichtung ist zumindest eine Messeinrichtung vorgesehen, welche entlang des Spritzpfads und/oder des Rührpfads angeordnet ist. Die zumindest eine Messeinrichtung ist dazu eingerichtet, den Spritzdruck und/oder den Rührdruck zu erfassen. Die eine oder mehreren Messeinrichtungen sind dabei jeweils vorzugsweise nach Art eines Drucksensoren und/oder Durchflusssensoren, beispielsweise Volumenstrommesser, ausgebildet. Ferner ist denkbar, dass bei mehreren Messeinrichtungen, von welchen wenigstens einer im Spritzpfad und wenigstens einer im Rührpfad angeordnet ist, zueinander unterschiedlich ausgeführt sind. Beispielsweise kann einer von mehreren Messeinrichtungen als Drucksensor und wenigstens eine andere Messeinrichtung als Volumenstrommesser bzw. Volumenstromsensor ausgebildet sein. Alternativ oder zusätzlich können die eine oder die mehreren Messeinrichtungen auch jeweils als Stellungssensoren ausgebildet sein, welche den Öffnungs- bzw. Schließgrad der jeweiligen Ventileinrichtung erfasst und/oder an der jeweiligen Ventileinrichtung im jeweiligen Pfad angeordnet ist. Dabei kann ferner vorgesehen sein, dass der Spritzdruck und/oder Rührdruck mittels der Steuerungseinrichtung und unter Berücksichtigung des Öffnungs- und/oder Schließgrads bestimmbar ist und/oder bestimmt wird. Bevorzugt ist die eine oder sind die mehreren Messeinrichtungen signalleitend mit der Steuerungseinrichtung verbunden und zum Bereitstellen eines Messsignals in Abhängigkeit des jeweils erfassten Drucks und/oder der Ventilstellung eingerichtet. Bei einer derartigen Ausführungsform sind die jeweiligen Drücke innerhalb der Spritzeinrichtung in einfacher Weise präzise bestimmbar und/oder aufeinander abstimmbar.

In einer anderen Weiterbildung der erfindungsgemäßen Spritzeinrichtung ist zumindest eine weitere Messeinrichtung vorgesehen, welche entlang des Hauptförderpfads angeordnet ist. Die zumindest eine weitere Messeinrichtung ist dazu eingerichtet, den Versorgungsdruck zu erfassen. Alternativ oder zusätzlich kann die oder eine andere Messeinrichtung auch entlang des weiteren und/oder zusätzlichen Förderpfads angeordnet sein. Die Messeinrichtung ist dabei vorzugsweise nach Art eines Drucksensoren und/oder Durchflusssensoren, beispielsweise Volumenstrommesser, ausgebildet. Alternativ oder zusätzlich kann die Messeinrichtung auch als Stellungssensor ausgebildet sein, welcher den Öffnungs- bzw. Schließgrad der, insbesondere weiteren und/oder zusätzlichen, Ventileinrichtung erfasst und/oder an der jeweiligen Ventileinrichtung im weiteren und/oder zusätzlichen Förderpfad angeordnet ist. Dabei kann ferner vorgesehen sein, dass der Versorgungsdruck und/oder der weitere und/oder zusätzliche Förderdruck mittels der Steuerungseinrichtung und unter Berücksichtigung des Öffnungs- und/oder Schließgrads bestimmbar ist und/oder bestimmt wird. Alternativ oder zusätzlich kann die Messeinrichtung an und/oder im Bereich der Fördereinrichtung angeordnet sein, und vorzugsweise dazu eingerichtet sein, einen Betriebsparameter der Fördereinrichtung, insbesondere eine Drehzahl, Stromaufnahme oder dergleichen, zu erfassen. Bevorzugt ist die Messeinrichtung signalleitend mit der Steuerungseinrichtung verbunden und zum Bereitstellen eines Messsignals in Abhängigkeit des Drucks und/oder der Ventilstellung und/oder des Betriebsparameters der Fördereinrichtung eingerichtet. Insbesondere ist die Steuerungseinrichtung dazu eingerichtet, das Messsignal der weiteren und/oder zusätzlichen Messeinrichtung zur Bestimmung der Drücke und/oder zur Ansteuerung der Ventileinrichtungen zu berücksichtigen. Bei einer derartigen Ausführungsform ist die Präzision bei der Bestimmung der jeweiligen Drücke und/oder zur Ansteuerung der Ventileinrichtung in einfacher Weise noch weiter gesteigert.

Darüber hinaus können bevorzugt auch noch weitere und/oder andere Förderpfade vorgesehen sein, wobei wenigstens einer davon besonders bevorzugt nach Art eines stromabwärts des Spritzpfads und/oder der Ausbringelemente angeordneten Rücklaufpfads zum Rückführen und/oder Umwälzen von nicht ausgebrachtem Spritzmittel, insbesondere zum Vorratsbehälter und/oder der Fördereinrichtung, aufweisen kann. Ferner kann der Rücklaufpfad alternativ oder zusätzlich als Ringleitungspfad oder dergleichen ausgebildet sein.

In einer weiteren bevorzugten Ausführungsform der erfindungsgemäßen Spritzeinrichtung ist die Steuerungseinrichtung, vorzugsweise unter Berücksichtigung von Messsignalen wenigstens einer Messeinrichtung, dazu eingerichtet, die Ventileinrichtungen derartig anzusteuern, dass während des Betriebs der Versorgungsdruck im Hauptförderpfad und/oder alternativ oder zusätzlich der weitere und/oder zusätzliche Förderdruck den Spritzdruck und/oder Rührdruck übersteigt.

Die der Erfindung zugrunde liegende Aufgabe wird ebenso mit einem Verfahren gemäß Anspruch 8 gelöst. Hinsichtlich der Vorteile und Modifikationen des erfindungsgemäßen Verfahrens wird zunächst auf die Vorteile und Modifikationen der erfindungsgemäßen Spritzeinrichtung verwiesen.

Es sei hierbei explizit erwähnt, dass die vorstehend beschriebenen Ausführungsformen und/oder Weiterbildungen der Spritzeinrichtung alternativ oder zusätzlich einzeln oder in Kombination beim nachstehend beschriebenen Verfahren zur Anwendung finden können.

Insbesondere ist ein Verfahren zum Betreiben einer Spritzeinrichtung, vorzugsweise einer Spritzeinrichtung nach einer der vorstehenden beschriebenen Ausführungsformen und/oder Weiterbildungen, für eine landwirtschaftliche Arbeitsmaschine zum Ausbringen eines Spritzmittels auf einer landwirtschaftlichen Nutzfläche vorgesehen. Dabei wird wenigstens ein Bestandteil des Spritzmittels in wenigstens einem der Spritzeinrichtung zugeordneten und/oder an einer Arbeitsmaschine angeordneten Vorratsbehälter vorgehalten. Ferner wird das Spritzmittel entlang eines Hauptförderpfads, welcher in fluidleitender Weise mit dem Vorratsbehälter verbunden ist, mit wenigstens einer Fördereinrichtung gefördert. Dabei wird zumindest ein Teil des Spritzmittels mit einem einstellbaren Spritzdruck entlang eines vom Hauptförderpfad abzweigenden Spritzpfads gefördert, entlang welchem eine Vielzahl von über der Nutzfläche verbringbaren und zum Ausbringen des Spritzmittels vorgesehenen Ausbringelemente angeordnet sind. Alternativ oder zusätzlich wird zumindest ein, insbesondere anderer, Teil des Spritzmittels mit einem einstellbaren Rührdruck entlang eines vom Hauptförderpfad abzweigenden Rührpfads zum Umrühren und/oder Umwälzen des in dem Vorratsbehälter vorhaltbaren Spritzmittels gefördert. Ferner wird zumindest ein, insbesondere anderer, Teil des Spritzmittels mit einem einstellbarem weiteren Förderdruck entlang zumindest eines weiteren von dem Hauptförderpfad abzweigenden Förderpfad gefördert. Dabei wird der Spritzdruck und/oder der Rührdruck mittels jeweils wenigstens einer zwischen dem Hauptförderpfad und dem Spritzpfad und zwischen dem Hauptförderpfad und dem Rührpfad angeordneten Ventileinrichtung angepasst.

Bei dem erfindungsgemäßen Verfahren ist vorzugsweise eine, insbesondere elektronische, Steuerungseinrichtung vorgesehen, welche dazu eingerichtet ist, einerseits die Ventileinrichtungen derart anzusteuern und andererseits zumindest einen Teil des Spritzmittels derart über den wenigstens einen weiteren Förderpfad umzuleiten, dass sich während des Ausbringens im Hauptförderpfad ein in an- und/oder aufstauender Weise resultierender Versorgungsdruck des Spritzmittels einstellt, welcher sich vom Spritzdruck und Rührdruck unterscheidet.

In einer Weiterbildung des erfindungsgemäßen Verfahrens werden die Ventileinrichtungen derart von der Steuerungseinrichtung angesteuert, dass sich der Versorgungsdruck im Hauptförderpfad gegenüber dem Spritzdruck und/oder Rührdruck nach Art eines Überdrucks an- und/oder aufstaut und/oder einstellt. Besonders bevorzugt ist dabei vorgesehen, dass der gegenüber dem Spritzdruck und/oder Rührdruck höhere Versorgungsdruck während des Betriebs für eine andere fluidische Funktion und/oder in einem anderen und/oder zusätzlichen Förderpfad gefördert und/oder verwendet wird. Eine derartige Ausführungsform hat den Vorteil, dass das Spritzmittel so nur mit dem tatsächlich erforderlichen Spritzdruck und/oder Rührdruck über den jeweiligen Spritzpfad und/oder Rührpfad gefördert wird, während zumindest nur die wenigstens eine weitere und/oder andere fluidische Funktion mit einem höheren Förderdruck betrieben wird. Dies wiederrum wirkt sich besonders positiv auf die Strömungseffizienz der Spritzeinrichtung aus.

In einer bevorzugten Ausführungsform des erfindungsgemäßen Verfahrens wird der Spritzdruck und/oder Rührdruck mittels wenigstens einer entlang des Spritzpfads und/oder Rührpfads angeordneten Messeinrichtung erfasst. Alternativ oder zusätzlich wird der Versorgungsdrucks mittels wenigstens einer entlang des Hauptförderpfads angeordneten Messeinrichtung erfasst. Ferner kann alternativ oder zusätzlich wenigstens eine weitere Messeinrichtung vorgesehen sein, welche entlang des weiteren und/oder zusätzlichen Förderpfads angeordnet ist und/oder dazu eingerichtet ist, den weiteren und/oder zusätzlichen Förderdruck, welcher vorzugsweise zumindest nahezu dem Versorgungsdruck entspricht, zu erfassen. Dabei werden außerdem bevorzugt die Ventileinrichtungen unter Berücksichtigung von Messsignalen wenigstens einer Messeinrichtung von der Steuerungseinrichtung gesteuert. Somit ist eine besonders einfache und/oder präzise Steuerung der jeweiligen Ventileinrichtungen und/oder Drücke ermöglicht.

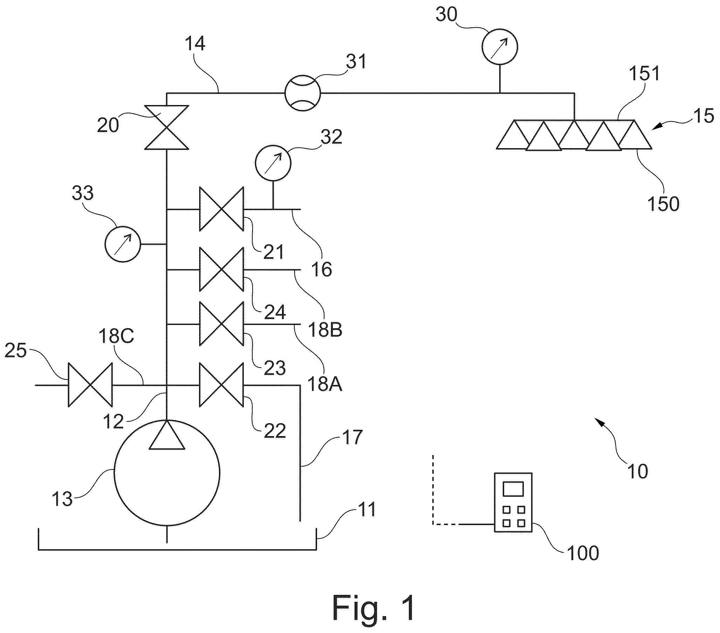

Weitere Einzelheiten der Erfindung sind der Beispielsbeschreibung und der Zeichnung zu entnehmen. Die Zeichnung zeigt
- Fig.1: eine erfindungsgemäße Spritzeinrichtung in einer schematischen Darstellung.

Eine Spritzeinrichtung 10 für eine in den Figuren nicht näher dargestellten landwirtschaftliche Arbeitsmaschine zum Ausbringen eines Spritzmittels auf einer landwirtschaftlichen Nutzfläche ist in der Fig.1 gezeigt.

Die landwirtschaftliche Arbeitsmaschine kann dabei je nach Anwendung beispielsweise als landwirtschaftliche Feldspritze ausgebildet sein.

Wie in der Figur zu erkennen, weist dargestellte Spritzeinrichtung 10 wenigstens einen Vorratsbehälter 11 zum Vorhalten wenigstens eines Bestandteils des auszubringenden Spritzmittels auf. Ferner ist einen Hauptförderpfad 12 zu sehen, welcher in fluidleitender Weise mit dem Vorratsbehälter 11 verbunden ist. Entlang des Hauptförderpfads 12 ist wenigstens eine, hier als Flüssigkeitspumpe ausgebildete, Fördereinrichtung 13 zum, insbesondere druckbeaufschlagten, Fördern des vorgehaltenen Spritzmittels angeordnet. Des Weiteren umfasst die Spritzeinrichtung 10 einen vom Hauptförderpfad 12 abzweigenden Spritzpfad 14. An dem Spritzpfad 14 sind eine Vielzahl von über der Nutzfläche verbringbaren und zum Ausbringen des Spritzmittels vorgesehene Ausbringelemente 15, insbesondere Spritzdüsen, angeordnet. Die Ausbringelemente 15 sind hierbei vereinfacht dargestellt, mittels vertikal nach unten weisender Spritzfächer 150 an einem Spritzbalken 151 angedeutet. Das von der Fördereinrichtung 13 aus dem wenigstens einen Vorratsbehälter 11 angesaugte Spritzmittel ist dabei zumindest zum Teil und mit einem einstellbaren Spritzdruck entlang des Spritzpfads 14 förderbar. Insbesondere ist dabei vorgesehen, dass das Spritzmittel mit dem jeweiligen eingestellten und/oder einstellbaren Spritzdruck an und/oder unmittelbar vor den Ausbringelementen 15 zum Applizieren auf der Nutzfläche ansteht und/oder beaufschlagt ist. Des Weiteren umfasst die Spritzeinrichtung 10 einen vom Hauptförderpfad 11 abzweigenden Rührpfad 16. Ferner ist alternativ oder zusätzlich vorgesehen, dass zumindest ein Teil des, insbesondere über die Fördereinrichtung 13 angesaugten, Spritzmittels mit einem einstellbaren Rührdruck zum Umrühren und/oder Umwälzen des in dem Vorratsbehälter vorhaltbaren Spritzmittels entlang des Rührpfads 16 förderbar ist. Es sei hierbei angemerkt, dass der Rührpfad 16 in der vorliegenden Figur der Einfachheit halber verkürzt dargestellt ist und stattdessen eigentlich mit einem zweiten Ende fluidleitend in den Vorratsbehälter 11 einmündet und/oder in den Vorratsbehälter 11 hineinragt. Alternativ oder zusätzlich können ein oder mehrere Düsen am im Vorratsbehälter 11 befindlichen Ende des Rührpfads 16 angeordnet sein.

Darüber hinaus ist zum Anpassen des Spritzdrucks und/oder des Rührdrucks zwischen dem Hauptförderpfad 12 und dem Spritzpfad 14 und zwischen dem Hauptförderpfad 12 und dem Rührpfad 16 jeweils wenigstens eine Ventileinrichtung 20, 21 angeordnet.

Des Weiteren weist die Spritzeinrichtung 10 wenigstens einen weiteren von dem Hauptförderpfad 12 abzweigenden Förderpfad 17 auf, entlang welchem zumindest ein Teil des Spritzmittels mit einem einstellbarem weiteren Förderdruck förderbar ist. In diesem Ausführungsbeispiel ist der wenigstens eine weitere Förderpfad 17 nach Art eines Rücklaufpfades bzw. Bypasses ausgebildet und dazu eingerichtet, zumindest einen Teil des Spritzmittels zu dem Vorratsbehälter 11 zurückzuleiten.

Ferner kann alternativ oder zusätzlich auch vorgesehen sein, dass der weitere als Förderpfad 17 bezeichnete Rücklaufpfad bzw. Bypass dazu eingerichtet ist, zumindest einen Teil des Spritzmittels zur Fördereinrichtung 13, insbesondere zwischen die Fördereinrichtung 13 und den Vorratsbehälter 11, zurückzuleiten und/oder einzuleiten.

Erfindungsgemäß ist außerdem eine, insbesondere elektronische, Steuerungseinrichtung 100 vorgesehen, welche dazu eingerichtet ist, einerseits die Ventileinrichtungen 20-25 derart anzusteuern und andererseits zumindest einen Teil des Spritzmittels derart über den wenigstens einen weiteren Förderpfad 17 umzuleiten, dass während des Betriebs im Hauptförderpfad 12 ein in an- und/oder aufstauender Weise resultierender Versorgungsdruck des Spritzmittels einstellbar ist, welcher sich vom Spritzdruck und Rührdruck unterscheidet.

Insbesondere ist dabei vorgesehen, dass zunächst zumindest die Ventileinrichtungen 20, 21 derart von der Steuerungseinrichtung 100 angesteuert werden, dass der Versorgungsdruck, des sich vor den Ventileinrichtungen 20, 21 angestauten Spritzmittels, den Spritzdruck und/oder Rührdruck zumindest temporär während des Betriebs übersteigt und/oder anderweitig aus dem Hauptförderpfad 12 umgeleitet und/oder ausgeleitet wird.

Bei näherer Betrachtung ist zwischen dem wenigstens einen weiteren Förderpfad 17 und dem Hauptförderpfad 12 außerdem eine weitere Ventileinrichtung 22 angeordnet. Die weitere Ventileinrichtung 22 ist dazu eingerichtet, den als weiteren Förderdruck, insbesondere als Rücklaufdruck, bezeichneten Druck des Spritzmittels entlang des weiteren Förderpfads 17 bzw. Rücklaufpfads anzupassen.

Darüber hinaus ist hierbei wenigstens ein zusätzlicher von dem Hauptförderpfad 12 abzweigender und für eine zusätzliche fluidische Funktion vorgesehener Förderpfad 18A innerhalb der Spritzeinrichtung 10 angeordnet. Das Spritzmittel ist somit alternativ oder zusätzlich mit einem einstellbarem zusätzlichen Förderdruck entlang des zusätzlichen Förderpfads 18A förderbar. In der beispielhaft gezeigten Ausführungsvariante sind sogar noch weitere bzw. mehrere zusätzliche Förderpfade 18B, 18C angedeutet, welche jeweils für eine definierte fluidische Funktion der Spritzeinrichtung 10 vorgesehen sind. Insbesondere sind zwischen dem einen oder den mehreren zusätzlichen Förderpfaden 18A-18C und dem Hauptförderpfad 12 zusätzliche Ventileinrichtungen 23-25 zum Anpassen des einen oder der mehreren zusätzlichen Förderdrücke angeordnet.

Je nach Anwendungsart kann der eine oder können die mehreren zusätzlichen Förderpfade 18A-18C in den einen Vorratsbehälter 11 und/oder in einen anderen (hier nicht gezeigten) Vorratsbehälter spritzmitteleinleitend angeordnet bzw. ausgebildet sein. Alternativ oder zusätzlich kann wenigstens einer der zusätzlichen Förderpfade 18A-18C für eine Innenreinigung des einen oder der mehreren Vorratsbehälter 11, einer Einspülschleuse oder anderer (hier nicht gezeigter) Einrichtungen der Spritzeinrichtung 10 vorgesehen sein. Ferner kann wenigstens einer der zusätzlichen Förderpfade 18A-18C alternativ oder zusätzlich auch zum Betreiben eines Injektors, insbesondere nach dem Venturi-Prinzip und/oder einer Strahlpumpe, vorgesehen sein.

Bei weiterer Betrachtung sind außerdem mehrere der Spritzeinrichtung 10 zugeordnete Messeinrichtungen 30-33 zu sehen. Wenigstens eine, hier beispielhaft als Drucksensor ausgebildete, erste Messeinrichtung 30 ist entlang des Spritzpfads 14 angeordnet und dazu eingerichtet, den Spritzdruck des entlang des Spritzpfads förderbaren Spritzmittels zu erfassen. Ferner ist alternativ oder zusätzlich eine weitere zweite Messeinrichtung 31 entlang des Spritzpfads 14 angeordnet, welche dazu eingerichtet ist, den Durchfluss, insbesondere Volumenstrom, des entlang des Spritzpfads 14 förderbaren Spritzmittels zu erfassen. Die zweite Messeinrichtung 31 ist hierbei beispielhaft als Volumenstrommesser bzw. Volumenstromsensor ausgebildet. Alternativ oder zusätzlich ist eine dritte Messeinrichtung 32 vorgesehen, welche hier entlang des Rührpfads 16 angeordnet ist und dazu eingerichtet ist, den Rührdruck des entlang des Rührpfads 16 förderbaren Spritzmittels zu erfassen. Die dritte Messeinrichtung 32 ist hierbei beispielhaft ebenfalls als Drucksensor ausgebildet, kann alternativ oder zusätzlich auch als Volumenstromsensor bzw. Volumenstrommesser ausgebildet sein.

Des Weiteren ist der Spritzeinrichtung 10 zumindest eine weitere hier vierte Messeinrichtung 33 zugeordnet, welche hier entlang des Hauptförderpfads 12 angeordnet ist. Alternativ oder zusätzlich kann die eine oder wenigstens eine andere Messeinrichtung 33 entlang des weiteren oder zusätzlichen Förderpfads 17, 18A-18C angeordnet sein. Die wenigstens eine weitere Messeinrichtung 33 ist dazu eingerichtet, den Versorgungsdruck und/oder einen anderen vom Hauptförderpfad 12 ausleitbaren Förderdruck zu erfassen. In diesem Ausführungsbeispiel ist die weitere Messeinrichtung 33 als Drucksensor gezeigt, wobei die weitere Messeinrichtung 33 alternativ oder zusätzlich auch als Volumenstromsensor ausgebildet sein kann.

Wenigstens eine oder sämtliche der vorstehend beschriebenen Messeinrichtungen 30-33 können alternativ oder zusätzlich als Stellungssensoren oder dergleichen ausgebildet sein, wobei die jeweilige Messeinrichtung 30-33 in dem Fall dann an der jeweiligen Ventileinrichtung 20-25 angeordnet ist. Ebenso ist die Steuerungseinrichtung 100 in dem Fall alternativ oder zusätzlich dazu eingerichtet, zur Bestimmung des jeweiligen Drucks, insbesondre Spritz-, Rühr- und/oder Versorgungsdrucks, die jeweilige Stellung der Ventileinrichtungen 20-25 zu berücksichtigen.

Insbesondere ist Steuerungseinrichtung 100 unter Berücksichtigung von Messsignalen wenigstens einer der Messeinrichtungen 30-33, dazu eingerichtet, die Ventileinrichtungen 20-25 derartig anzusteuern, dass während des Betriebs der Versorgungsdruck im Hauptförderpfad 12 den Spritzdruck und/oder Rührdruck im Spritz- und/oder Rührpfad 14, 16 übersteigt.

Alternativ oder zusätzlich kann ein Verfahren zum Betreiben der vorstehend beschriebenen Spritzeinrichtung 10 wie nachfolgend dargelegt ausgeführt sein.

Das Spritzmittel wird während des Betriebs der Spritzeinrichtung 10 und/oder Arbeitsmaschine im Vorratsbehälter 11 vorgehalten und/oder bevorratet. In einem ersten Schritt wird Spritzmittel aus dem Vorratsbehälter 11 mittels der Fördereinrichtung 13 angesaugt und in druckbeaufschlagter Weise entlang des Hauptförderpfads 12 gefördert. Insbesondere je nach Betriebssituation und/oder Betriebsmodus wird in einem weiteren Schritt zumindest ein Teil des Spritzmittels mit einem einstellbaren Spritzdruck entlang des vom Hauptförderpfad 12 abzweigenden Spritzpfads 14 zu den Ausbringelementen 15 gefördert. In einem anderen Schritt wird zumindest ein Teil des Spritzmittels je nach Betriebssituation und/oder Betriebsmodus alternativen oder zusätzlichen mit einem einstellbaren Rührdruck entlang des vom Hauptförderpfad 12 abzweigenden Rührpfads 16 zum Umrühren und/oder Umwälzen des in dem Vorratsbehälter 11 vorhaltbaren Spritzmittels gefördert. Ferner wird der Spritzdruck und/oder der Rührdruck in einem weiteren Schritt mittels der jeweils zwischen dem Hauptförderpfad 12 und dem Spritzpfad 14 und zwischen dem Hauptförderpfad 12 und dem Rührpfad 16 angeordneten Ventileinrichtung 20, 21 angepasst.

In einem alternativen oder zusätzlichen Schritt wird außerdem ein Teil des Spritzmittels mit einem einstellbarem weiteren Förderdruck z.B. einem Rücklaufdruck entlang des weiteren von dem Hauptförderpfad 12 abzweigenden Förderpfads 17 gefördert.

Die, insbesondere elektronische, Steuerungseinrichtung 100, steuert einerseits die Ventileinrichtungen 20-25 derart an und leitete andererseits zumindest einen Teil des Spritzmittels derart über den wenigstens einen weiteren Förderpfad 17 um, dass sich während des Ausbringens im Hauptförderpfad 12 ein in an- und/oder aufstauender Weise resultierender Versorgungsdruck des Spritzmittels einstellt, welcher sich vom Spritzdruck und Rührdruck unterscheidet und/oder diese insbesondere übersteigt.

Während des Betriebs wird in einem weiteren alternativen oder zusätzlichen Schritt der Spritzdruck und/oder Rührdruck mittels der entlang des Spritzpfads 14 und/oder Rührpfads 16 angeordneten Messeinrichtungen 30-32 erfasst und/oder überwacht. In einem ferner alternativen oder zusätzlichen Schritt wird der Versorgungsdruck mittels der entlang des Hauptförderpfads 12 angeordneten Messeinrichtung 33 erfasst und/oder überwacht. Die Steuerungseinrichtung 100 steuert dabei die Ventileinrichtungen 20-25 unter Berücksichtigung der Messsignale der Messeinrichtungen 30-32 an und stellt die Ventileinrichtungen 20-25 somit entsprechend ein.

Darüber hinaus sei hierbei explizit erwähnt, dass die Spritzeinrichtung 10 auch noch weitere und/oder andere hier nicht abgebildete Förderpfade wie beispielsweise einen stromabwärts des Spritzpfads 14 und/oder der Ausbringelemente 15 angeordneten Rücklaufpfad zum Rückführen von nicht ausgebrachtem Spritzmittel, insbesondere zum Vorratsbehälter 11 und/oder der Fördereinrichtung 13, aufweisen kann. Ferner kann der Rücklaufpfad alternativ oder zusätzlich als Ringleitungspfad oder dergleichen ausgebildet sein.

Es versteht sich, dass in den zuvor beschriebenen Ausführungsbeispielen genannte Merkmale nicht auf diese speziellen Kombinationen beschränkt und auch in beliebigen anderen Kombinationen möglich sind. Weiterhin versteht es sich, dass in den Figuren gezeigte Geometrien nur beispielhaft sind und auch in beliebigen anderen Ausgestaltungen möglich sind.

### Bezugszeichenliste

- 10: Spritzeinrichtung
- 11: Vorratsbehälter
- 12: Hauptförderpfad
- 13: Fördereinrichtung
- 14: Spritzpfad
- 15: Ausbringelemente
- 150: Spritzfächer
- 151: Spritzbalken
- 16: Rührpfad
- 17: Weiterer Förderpfad
- 18A-18C: Zusätzliche Förderpfade
- 20-25: Ventileinrichtung
- 30-33: Messeinrichtungen
- 100: Steuerungseinrichtung

## Patentansprüche

1. Spritzeinrichtung (10), für eine landwirtschaftliche Arbeitsmaschine zum Ausbringen eines Spritzmittels auf einer landwirtschaftlichen Nutzfläche, umfassend;
- einen Vorratsbehälter (11) zum Vorhalten wenigstens eines Bestandteils des Spritzmittels;
- einen Hauptförderpfad (12), welcher in fluidleitender Weise mit dem Vorratsbehälter (11) verbunden ist, und entlang welchem wenigstens eine Fördereinrichtung (13) zum Fördern des Spritzmittels angeordnet ist;
- einen vom Hauptförderpfad (12) abzweigenden Spritzpfad (14), entlang welchem eine Vielzahl von über der Nutzfläche verbringbaren und zum Ausbringen des Spritzmittels vorgesehenen Ausbringelementen (15), vorzugsweise Spritzdüsen, angeordnet sind, und entlang welchem zumindest ein Teil des Spritzmittels mit einem einstellbaren Spritzdruck förderbar ist;
- einen vom Hauptförderpfad (12) abzweigenden Rührpfad (16), entlang welchem zumindest ein Teil des Spritzmittels mit einem einstellbaren Rührdruck zum Umrühren und/oder Umwälzen des in dem Vorratsbehälter (11) vorhaltbaren Spritzmittels förderbar ist;
- wenigstens einen weiteren von dem Hauptförderpfad (12) abzweigenden Förderpfad (17), entlang welchem zumindest ein Teil des Spritzmittels mit einem einstellbarem weiteren Förderdruck förderbar ist;
wobei zum Anpassen des Spritzdrucks und/oder des Rührdrucks zwischen dem Hauptförderpfad (12) und dem Spritzpfad (14) und zwischen dem Hauptförderpfad (12) und dem Rührpfad (16) jeweils wenigstens eine Ventileinrichtung (20, 21) angeordnet ist,
**gekennzeichnet durch** eine, insbesondere elektronische, Steuerungseinrichtung (100), welche dazu eingerichtet ist, einerseits die Ventileinrichtungen (20, 21) derart anzusteuern und andererseits zumindest einen Teil des Spritzmittels derart über den wenigstens einen weiteren Förderpfad (17) umzuleiten, dass während des Betriebs im Hauptförderpfad (12) ein in an- und/oder aufstauender Weise resultierender Versorgungsdruck des Spritzmittels einstellbar ist, welcher sich vom Spritzdruck und/oder Rührdruck unterscheidet.

2. Spritzeinrichtung (10) nach Anspruch 1, **dadurch gekennzeichnet, dass** der wenigstens eine weitere Förderpfad (17) nach Art eines Rücklaufpfades bzw. Bypasses zum Zurückleiten wenigstens eines Teils des Spritzmittels zu dem Vorratsbehälter (11) und/oder zu der Fördereinrichtung (13) ausgebildet ist.

3. Spritzeinrichtung (10) nach zumindest einem der vorgenannten Ansprüche 1 oder 2, **dadurch gekennzeichnet, dass** zwischen dem wenigstens einen weiteren Förderpfad (17) und dem Hauptförderpfad (12) wenigstens eine weitere Ventileinrichtung (22) zum Anpassen des weiteren Förderdrucks, insbesondere Rücklaufdrucks, angeordnet ist.

4. Spritzeinrichtung (10) nach zumindest einem der vorgenannten Ansprüche 1 bis 3, **gekennzeichnet durch** zumindest einen zusätzlichen von dem Hauptförderpfad (12) abzweigenden und für eine zusätzliche fluidische Funktion vorgesehener Förderpfad (18A-18C), entlang welchem zumindest ein Teil des Spritzmittels mit einem einstellbarem zusätzlichen Förderdruck förderbar ist; wobei vorzugsweise zwischen dem Förderpfad (18A-18C) und dem Hauptförderpfad (12) wenigstens eine zusätzliche Ventileinrichtung (23-25) zum Anpassen des zusätzlichen Förderdrucks angeordnet ist.

5. Spritzeinrichtung (10) nach zumindest einem der vorgenannten Ansprüche 1 bis 4, **gekennzeichnet durch** zumindest eine Messeinrichtung (30-32), welche entlang des Spritzpfads (14) und/oder des Rührpfads (16) angeordnet ist, und welche dazu eingerichtet ist, den Spritzdruck und/oder den Rührdruck zu erfassen.

6. Spritzeinrichtung (10) nach zumindest einem der vorgenannten Ansprüche 1 bis 5, **gekennzeichnet durch** zumindest eine weitere Messeinrichtung (33), welche entlang des Hauptförderpfads (12) angeordnet ist, und welche dazu eingerichtet ist, den Versorgungsdruck zu erfassen.

7. Spritzeinrichtung (10) nach zumindest einem der vorgenannten Ansprüche 1 bis 6, **dadurch gekennzeichnet, dass** die Steuerungseinrichtung (100), vorzugsweise unter Berücksichtigung von Messsignalen wenigstens einer Messeinrichtung (30-33), dazu eingerichtet ist, die Ventileinrichtungen (20-25) derartig anzusteuern, dass während des Betriebs der Versorgungsdruck im Hauptförderpfad (12) den Spritzdruck und/oder Rührdruck übersteigt.

8. Verfahren zum Betreiben einer Spritzeinrichtung (10) für eine landwirtschaftliche Arbeitsmaschine zum Ausbringen eines Spritzmittels auf einer landwirtschaftlichen Nutzfläche, insbesondere eine Spritzeinrichtung (10) nach einem der vorstehenden Ansprüche, mit den Schritten:
- Vorhalten wenigstens eines Bestandteils des Spritzmittels in einem Vorratsbehälter (11);
- Fördern des Spritzmittels entlang eines Hauptförderpfads (12), welcher in fluidleitender Weise mit dem Vorratsbehälter (11) verbunden ist, mit wenigstens einer Fördereinrichtung (13);
- Fördern zumindest eines Teils des Spritzmittels mit einem einstellbaren Spritzdruck entlang eines vom Hauptförderpfad (12) abzweigenden Spritzpfads (14), entlang welchem eine Vielzahl von über der Nutzfläche verbringbaren und zum Ausbringen des Spritzmittels vorgesehenen Ausbringelemente (15) angeordnet sind;
- Fördern zumindest eines Teils des Spritzmittels mit einem einstellbaren Rührdruck entlang eines vom Hauptförderpfad (12) abzweigenden Rührpfads (16) zum Umrühren und/oder Umwälzen des in dem Vorratsbehälter (11) vorhaltbaren Spritzmittels;
- Fördern zumindest eines Teils des Spritzmittels mit einem einstellbarem weiteren Förderdruck entlang zumindest eines weiteren von dem Hauptförderpfad (12) abzweigenden Förderpfad (17);
- Anpassen des Spritzdrucks und/oder des Rührdrucks mittels jeweils wenigstens einer zwischen dem Hauptförderpfad (12) und dem Spritzpfad (14) und zwischen dem Hauptförderpfad (12) und dem Rührpfad (16) angeordneten Ventileinrichtung (20, 21);
**gekennzeichnet durch** eine, insbesondere elektronische, Steuerungseinrichtung (100), welche dazu eingerichtet ist, einerseits die Ventileinrichtungen (20, 21) derart anzusteuern und andererseits zumindest einen Teil des Spritzmittels derart über den wenigstens einen weiteren Förderpfad (17) umzuleiten, dass sich während des Ausbringens im Hauptförderpfad (12) ein in an- und/oder aufstauender Weise resultierender Versorgungsdruck des Spritzmittels einstellt, welcher sich vom Spritzdruck und Rührdruck unterscheidet.

9. Verfahren nach Anspruch 8, **dadurch gekennzeichnet, dass** die Ventileinrichtungen (20-25) derart von der Steuerungseinrichtung (100) angesteuert werden, dass sich der Versorgungsdruck im Hauptförderpfad (12) gegenüber dem Spritzdruck und/oder Rührdruck nach Art eines Überdrucks an- und/oder aufstaut und/oder einstellt.

10. Verfahren nach zumindest einem der vorgenannten Ansprüche 8 oder 9, **gekennzeichnet durch** zumindest einen der nachfolgenden Schritte:
- Erfassen des Spritzdrucks und/oder Rührdrucks mittels wenigstens einer entlang des Spritzpfads (14) und/oder Rührpfads (16) angeordneten Messeinrichtung (30-32); und/oder
- Erfassen des Versorgungsdrucks mittels wenigstens einer entlang des Hauptförderpfads (12) angeordneten Messeinrichtung (33);
wobei die Steuerungseinrichtung (100) die Ventileinrichtungen (20-25) unter Berücksichtigung von Messsignalen wenigstens einer Messeinrichtung (30-33) steuert.
